Europäisches Patentamt

(19) European Patent Office

Office européen des brevets

(11) Veröffentlichungsnummer: **0 085 186**
**B1**

(12) # EUROPÄISCHE PATENTSCHRIFT

(45) Veröffentlichungstag der Patentschrift:
05.12.84

(51) Int. Cl.³: **G 03 B 23/02**, G 02 B 27/02,
G 09 F 11/30

(21) Anmeldenummer: **82112080.5**

(22) Anmeldetag: **29.12.82**

(54) **Behälter für Fotoabzüge.**

(30) Priorität: **29.01.82 DE 3202928**

(43) Veröffentlichungstag der Anmeldung:
**10.08.83 Patentblatt 83/32**

(45) Bekanntmachung des Hinweises auf die Patenterteilung:
**05.12.84 Patentblatt 84/49**

(84) Benannte Vertragsstaaten:
**AT BE CH DE FR GB IT LI LU NL SE**

(56) Entgegenhaltungen:
**DE - A - 2 912 642**
**DE - A - 2 912 643**

(73) Patentinhaber: **Licinvest AG, Hartbertstrasse 9,
CH-7002 Chur (CH)**

(72) Erfinder: **Ackeret, Peter, Allmendstrasse 18,
CH-8700 Küsnacht (CH)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

## Beschreibung

Die Erfindung betrifft einen Behälter für Fotoabzüge mit den im Oberbegriff des Anspruchs 1 genannten Merkmalen. Behälter, die diese Merkmale aufweisen, sind aus der DE-OS Nr. 2742347 bekannt. Sie dienen dazu, in der Art eines Bilderrahmens den obersten Abzug eines Stapels von Fotoabzügen plan an dem Sichtfenster zu präsentieren, und zwar unabhängig davon, wie viele Abzüge der Stapel umfasst. Die Anpresswirkung der Federanordnung soll jedoch aufgehoben sein, während der Bilderstapel entnommen oder eingelegt wird.

Die bekannten Behälter sind jedoch noch verbesserungsbedürftig. Einerseits muss die Handhabung für den Benutzer problemlos sein, insbesondere darf auch bei unvorsichtiger Handhabung keine Beschädigung der Fotoabzüge eintreten. Dieses Risiko besteht besonders dann, wenn der Stapel nur wenige Abzüge umfasst und die Abzüge nicht eben sind. Zum andern sollen die Behälter, als ausgesprochene Massenartikel, mit einem Minimum an Aufwand gefertigt werden können, und zwar sowohl hinsichtlich des Materialverbrauchs als auch hinsichtlich der Montage.

Aufgabe der Erfindung ist es, den gattungsgleichen Behälter derart weiterzubilden, dass die obigen Forderungen erfüllt sind.

Die gemäss der Erfindung vorgesehene Lösung dieser Aufgabe ist im Anspruch 1 definiert; die Unteransprüche nennen bevorzugte Ausgestaltungen der Erfindungsidee.

Die beigefügten Zeichnungen stellen, weitgehend schematisiert, ein Ausführungsbeispiel des erfindungsgemässen Behälters dar.

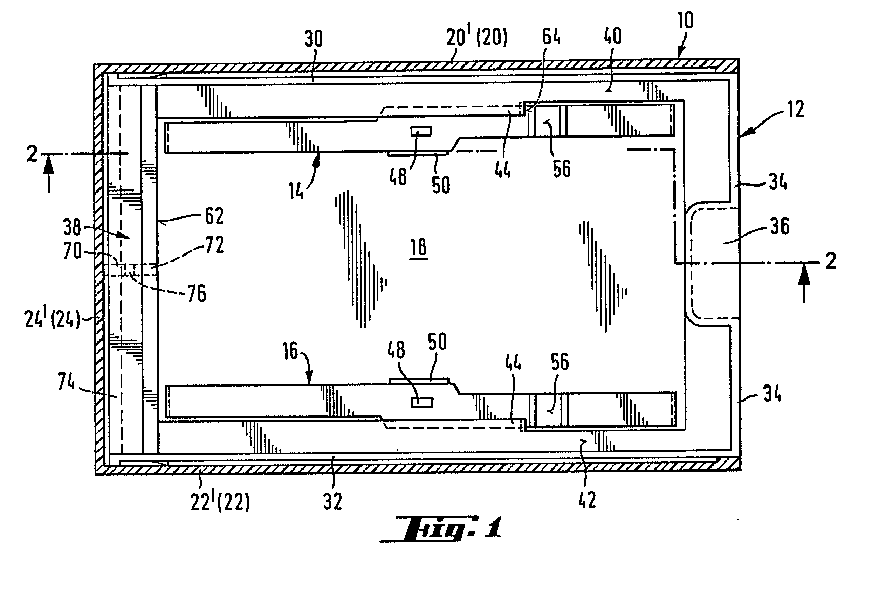

Fig. 1 zeigt den Grundriss des Behälters, etwa gemäss der Schnittlinie 1-1 in Fig. 2, jedoch ohne eingelegten Abzugstapel,

Fig. 2 ist ein Schnittdarstellung etwa gemäss Linie 2-2 in Fig. 1, jedoch mit eingelegten Fotoabzügen,

Fig. 3 zeigt den Behälter analog zu Fig. 2, jedoch halb geöffnet, und

Fig. 4 ist ebenfalls analog zu Fig. 2 bzw. 3, wobei der Behälter hier ganz geöffnet ist.

Der Behälter besteht aus vier Bauteilen: Dem Gehäuse 10, das seinerseits aus einer Unterschale und einer Oberschale zusammengefügt ist, die im Falle von Kunststoffspritzgussteilen miteinander ultraschallverschweisst sein können, ferner dem einstückig aus Kunststoff gespritzten Schieber 12 und den beiden Federn 14 und 16, die gemeinsam die Federanordnung bilden.

Die Gehäuseunterschale umfasst den Gehäuseboden 18 und die bis etwa zu halben Gehäusedicke reichenden Längswände 20, 22 sowie Querwand 24. Die Oberschale umfasst mit denen der Unterschale kongruente Längswände 20', 22' und Querwand 24', angeformt an eine dem Gehäuseboden gegenüberliegende Fensterrahmenfläche 26 mit Fensterausschnitt 28. Dieser kann offen sein, mittels einer innen eingeklebten Folie aus transparentem Material verschlossen oder auch, wie gezeichnet, durch eine eingesetzte Scheibe aus transparentem Kunststoff verglast sein.

Der Schieber ist im Prinzip ein offener Rahmen mit Längsholmen 30 und 32, einem äusseren Querholm 34 mit Griffstück 36 und einem inneren Querholm 38. Die Längsholme und der äussere Querholm sind im Querschnitt winkelförmig, wobei die nach innen abgewinkelten Schenkel parallel zum Sichtfenster stehen. Auf diesen Schenkeln 40, 42 der Längsholme liegt der Stapel von Fotoabzügen (nachfolgend kurz Bilder genannt). Die beiden Schenkel 40, 42 weisen in der Draufsicht eine Abstufung auf, die sich dadurch ergibt, dass an die Schenkel schmale Kufen 44 angeformt sind; zwischen diesen und dem Gehäuseboden verbleibt jeweils ein Freiraum 46.

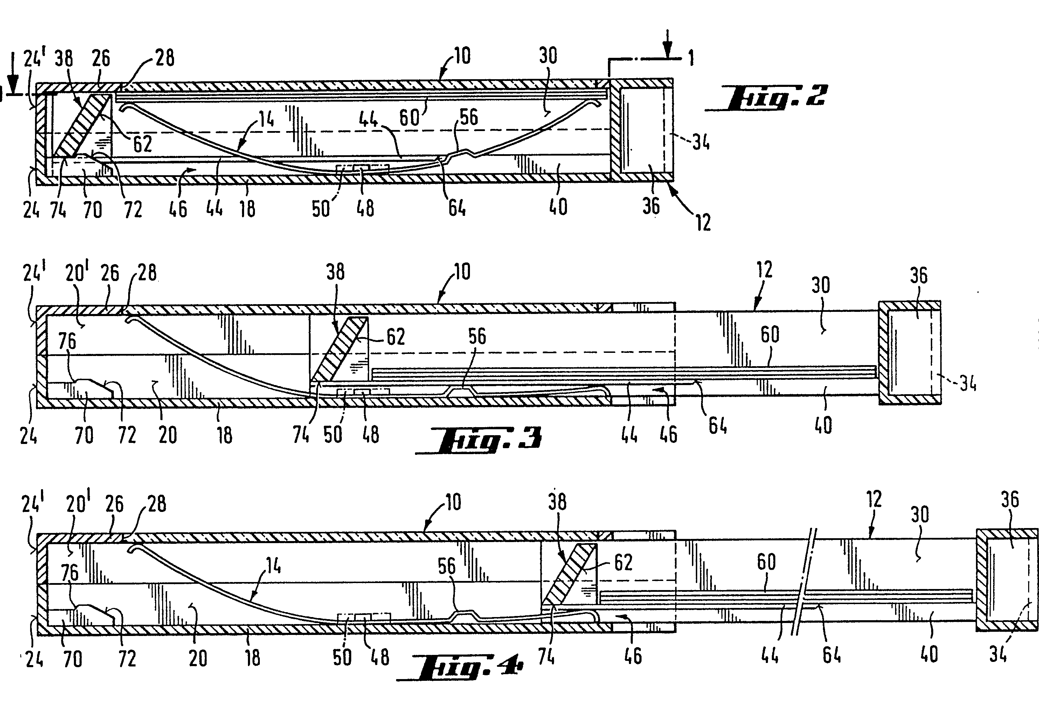

Vom Gehäuseboden ragen auf das Sichtfenster zwei Aufsteckzapfen 48 zu, und auch Rippen 50 sind — parallel zueinander und zur Bewegungsrichtung des Schiebers, wie sich ohne weiteres aus Fig. 2-4 ergibt — an den Gehäuseboden angeformt.

Auf die Zapfen 48 sind je eine Blattfeder 14 bzw. 16 mit einer Öffnung oder einem Loch aufgesteckt, das hier komplementär zur Kontur der Zapfen 48 als Rechteckdurchbruch ausgebildet ist. Die Rippen 50 dienen zusätzlich dazu, ein etwaiges Schrägstellen der Blattfedern zu verhindern: An ihnen liegen die Federn mit jeweils einer Kante an.

Die beiden Blattfedern weisen eine ganz flache, Z-förmige Kontur auf, die so konzipiert ist, dass der Zuschnitt beider Federn gleich sein kann (wenn sie auch spiegelbildlich vorgespannt und montiert werden) und dass sie ohne Abfall von einem Band abgelängt werden können, oder zumindest mit einem Minimum von Abfall.

Die Vorspannung oder Verwölbung der Federn ist in Fig. 2 erkennbar. Die beiden freien Federenden erstrecken sich vom Befestigungspunkt 48 aus nach oben und sind dicht vor ihrer Endkante, wo sie an der Rückseite des untersten Bildes 60 anliegen, weich abgerundet. Das der Gehäuseöffnung und damit dem äusseren Querholm 34 des Schiebers zugewandte Ende beider Federn ist mit einer Prägung versehen, so dass sich eine Nase 56 ergibt. Wenn der Schieber ganz in das Gehäuse eingeschoben ist, überdecken seine Kufen 44 den Befestigungsbereich und einen Teil des auf die Gehäuseöffnung zu ragenden Federendes im äusseren Randabschnitt der Federn; die Kufen enden gerade vor den Verdickungen 56. Die der Gehäuseöffnung abgewandten Federenden hingegen werden nicht von den Kufen 44 überdeckt. In dieser Position des Schiebers können mithin (vgl. Fig. 2) beide Federenden sich entsprechend ihrer Verwölbung von unten an die Bilder anlegen und sie gegen das Sichtfenster pressen.

Wird nun am Griffstück des Schiebers gezogen, so läuft der innere Querholm 38 mit seiner schrägen Steuerfläche 62 auf das angerundete innere Federende auf und drückt dieses nach unten, weg vom Sichtfenster des Gehäuses. Etwa gleichzeitig laufen auch schräge Steuerflächen 64 an den Enden der Kufen 44 auf die Nase 56 der anderen freien Federenden auf und drücken diese ebenfalls vom Sichtfenster ab. Der Bilderstapel wird damit fast unmittelbar nach dem Beginn des Schieberhubes lose und wird ohne weiteres vom Schieber mitgenommen. Die inneren Federenden werden vom Querholm 38 während des weiteren Schieberhubes allmählich wieder freigegeben, während die äusseren, als Bremse wirkenden Federenden unterdrückt bleiben. Der letztere Umstand ist von besonderer Wichtigkeit. Würde nämlich auch dieses Federende, etwa während des Wiedereinschubs des Schiebers, allmählich freigegeben, könnte ein Bild, insbesondere wenn es nach oben gewölbt ist, wie gestrichelt in Fig. 3 angedeutet, einerseits von der Feder am Gehäuse festgeklemmt werden, während noch der Schieber mit seinem Griffstück das Bild in das Gehäuse zu schieben sucht. Diese Gefahr wäre gering bei einem dicken Bilderstapel, ist aber erheblich, wenn nur wenige oder nur ein einziges Bild eingeschoben werden.

An das Gehäuse ist noch im Bereich der seiner Öffnung gegenüberliegenden unteren Kante ein Verriegelungselement 70 angeformt, über dessen schräge Führungsfläche 72 die Unterkante 74 des inneren Schieberquerholms 38 gleitet (wobei eine elastische Verformung stattfindet), ehe sie hinter einer Stufe 76 wieder nach unten schnappt, sobald der Schieber vollständig eingeschoben ist.

**Patentansprüche**

1. Behälter zur Aufbewahrung von gleichformatigen Fotoabzügen (60) mit einem im wesentlichen rechteckigen Grundriss aufweisenden und mit einem Sichtfenster versehenen Gehäuse (10), einem parallel zur Sichtfensterebene durch eine in einer Gehäuseschmalseite vorgesehene Öffnung verschieblichen, im wesentlichen rahmenförmigen Schieber (12) und einer im Gehäuse befestigten Federanordnung (14, 16), mittels der in dem Schieber (12) liegenden Fotoabzüge (60) an das Gehäusesichtfenster anpressbar sind, jedoch beim Herausziehen des Schiebers aus dem Gehäuse freigegeben werden, dadurch gekennzeichnet, dass die Federanordnung etwa mittig am Gehäuseboden abgestützte und mit ihren freien Enden auf das Sichtfenster zu vorgespannte Blattfedern (14, 16) umfasst, die sich parallel zur Bewegungsrichtung des Schiebers (12) erstrecken, und dass der Schieber (12) Steuerkanten (44) aufweist, die nach Beginn des Schieberauszugs im wesentlichen gleichzeitig auf beide gehäuseöffnungsseitigen Federenden auflaufen, diese vom Sichtfenster wegdrücken und auf dem gesamten restlichen Schieberhub weggedrückt halten.

2. Behälter nach Anspruch 1, dadurch gekennzeichnet, dass die Federanordnung zwei Blattfedern (14, 16) umfasst.

3. Behälter nach einem der beiden Ansprüche 1 oder 2, dadurch gekennzeichnet, dass die Steuerkante (44) für die der Gehäuseöffnung abgewandten Federenden an einem parallel zur Gehäuseöffnung verlaufenden Querholm (38) des Schiebers (12) ausgebildet ist.

4. Behälter nach einem der Ansprüche 1, 2 oder 3, dadurch gekennzeichnet, dass der Schieber (12) parallel zu seinem Hub verlaufende Längsholme (30, 32) aufweist, an die mit den Steuerkanten für die der Gehäuseöffnung zugewandten Federenden versehene Steuerkufen (44) angeformt sind.

5. Behälter nach Anspruch 4, dadurch gekennzeichnet, dass die Blattfedern (14, 16) nahe ihrer Befestigungsstelle auf der der Gehäuseöffnung zugewandten Seite eine mit den Steuerkufen in Wirkverbindung tretende Verdickung (56) aufweisen.

6. Behälter nach Anspruch 5, dadurch gekennzeichnet, dass die Verdickung als Prägung (56) des Blattfedermaterials ausgebildet ist.

7. Behälter nach Anspruch 3, dadurch gekennzeichnet, dass der Querholm (38) als ein Element einer Verriegelungsanordnung für das Halten des Schiebers (12) im Gehäuse (10) ausgebildet ist, während das andere Element (70) an das Gehäuse angeformt ist.

8. Behälter nach einem der vorangehenden Ansprüche, dadurch gekennzeichnet, dass der Schieber (12) ein einstückig gespritztes Kunststoffteil ist.

9. Behälter nach einem der vorangehenden Ansprüche, dadurch gekennzeichnet, dass das Gehäuse Kunststoffspritzteile umfasst.

10. Behälter nach Anspruch 2, dadurch gekennzeichnet, dass beide Blattfedern (14, 16) denselben Zuschnitt aufweisen.

11. Behälter nach einem der vorangehenden Ansprüche, dadurch gekennzeichnet, dass der Gehäuseboden Zapfen (48) aufweist, auf die die Blattfedern (14, 16) mit einer komplementär ausgebildeten Öffnung aufgesteckt sind.

12. Behälter nach Anspruch 11, dadurch gekennzeichnet, dass der Gehäuseboden Rippen (50) aufweist, an denen die Blattfedern (14, 16) seitlich abgestützt sind.

13. Behälter nach einem der vorangehenden Ansprüche, dadurch gekennzeichnet, dass die dem Gehäusefenster nahen Kanten der Blattfedern (14, 16) von diesem weg und auf den Gehäuseboden (18) zu abgebogen sind.

14. Behälter nach Anspruch 1, dadurch gekennzeichnet, dass eine einzige, etwa mittig im Gehäuse angeordnete Blattfeder vorgesehen ist.

15. Behälter nach Anspruch 2, dadurch gekennzeichnet, dass die beiden Federn in Richtung des Schieberauszugs unterteilt sind.

**Claims**

1. Container for storing photographic prints (60) of like format comprising a housing (10) that has a substantially rectangular outline and is provided with a viewing window, a slider member (12) that is substantially in the form of a frame and is displaceable parallel to the plane of the viewing window through an opening provided in a narrow side of the housing, and a spring arrangement (14, 16) secured in the housing by means of which photographic prints (60) lying on the slider member (12) can be pressed towards the viewing window of the housing but are released when the slider member is pulled out of the housing, characterised in that the spring arrangement comprises leaf springs (14, 16) that are supported approximately centrally on the base of the housing, are biassed by their free ends towards the viewing window and extend parallel to the direction of movement of the slider member (12), and the slider member (12) has control edges (44) which, after the beginning of removal of the slider member, run substantially simultaneously onto the two spring ends at the side of the housing having the opening, push the ends away from the viewing window and maintain them pressed away over the whole of the remaining travel of the slider member.

2. Container according to Claim 1, characterised in that the spring arrangement comprises two leaf springs (14, 16).

3. Container according to one of Claims 1 or 2, characterised in that the control edge (44) for the spring ends remote from the housing opening is provided on a cross-piece (38) of the slider member (12), which cross-piece runs parallel to the housing opening.

4. Container according to one of Claims 1, 2 or 3, characterised in that running parallel to its travel the slider member (12) has longitudinal members (30, 32) on which there are formed control runners (44) provided with the control edges for the spring ends facing the housing opening.

5. Container according to Claim 4, characterised in that, adjacent their fastening place on the side facing the housing opening, the leaf springs (14, 16) have a portion of increased thickness (56) entering into effective connection with the control runners.

6. Container according to Claim 5, characterised in that the portion of increased thickness is constructed as a deformation (56) of the leaf spring material.

7. Container according to Claim 3, characterised in that the cross-piece (38) is constructed as the one element of a locking arrangement for holding the slider member (12) in the housing (10), while the other element (70) is moulded onto the housing.

8. Container according to one of the preceding claims, characterised in that the slider member (12) is a one-piece injection-moulded plastics piece.

9. Container according to one of the preceding claims, characterised in that the housing comprises injection-moulded plastics parts.

10. Container according to Claim 2, characterised in that the two leaf springs (14, 16) are identically formed.

11. Container according to one of the preceding claims, characterised in that the base of the housing has pegs (48) onto which the leaf springs (14, 16), which have a complementary opening, are fitted.

12. Container according to Claim 11, characterised in that the base of the housing has ribs (50) on which the leaf springs (14, 16) are supported laterally.

13. Container according to one of the preceding claims, characterised in that the edges of the leaf springs (14, 16) adjacent to the housing window are bent away from the latter towards the base (18) of the housing.

14. Container according to Claim 1, characterised in that there is provided a single leaf spring arranged approximately centrally in the housing.

15. Container according to Claim 2, characterised in that the two springs are divided into sections in the direction of removal of the slider member.

**Revendications**

1. Récipient pour conserver des épreuves photographiques de même format, comportant un boîtier (10) de forme sensiblement rectangulaire en plan et pourvu d'une lucarne, un tiroir (12) sensiblement en forme de cadre qu'on peut faire coulisser parallèlement au plan de la lucarne dans une ouverture prévue à cet effet dans un petit côté du boîtier, et un système de ressorts (14, 16) permettant d'appliquer contre la lucarne du boîtier des épreuves photographiques (60) disposées dans le tiroir (12), ces épreuves étant cependant libérées lorsqu'on sort le tiroir hors du boîtier, caractérisé en ce que le système de ressorts comporte des lames de ressorts (14, 16) qui s'étendent parallèlement au sens du mouvement du tiroir (12) et sont en appui sur le fond du boîtier sensiblement au milieu de celui-ci, les extrémités libres de ces ressorts exerçant un effort élastique en direction de la lucarne, et en ce que le tiroir (12) comporte des bords de commande (44) qui viennent appuyer, sensiblement en même temps après le début du mouvement de sortie du tiroir, sur les deux extrémités des ressorts situées du côté de l'ouverture du boîtier, de manière à écarter ces extrémités de la lucarne, en les maintenant ainsi écartées sur tout le reste de la course de sortie du tiroir.

2. Récipient selon la revendication 1, caractérisé en ce que le système de ressorts comporte deux lames de ressorts (14, 16).

3. Récipient selon l'une des revendications 1 ou 2, caractérisé en ce que le bord de commande (44) coopérant avec l'extrémité des ressorts en regard de l'ouverture du boîtier est porté par une barrette transversale (38) du tiroir, qui est parallèle à l'ouverture du boîtier.

4. Récipient selon l'une des revendications 1, 2 ou 3, caractérisé en ce que le tiroir (12) comporte des barrettes longitudinales (30, 32) parallèles au sens du déplacement du tiroir, et sur lesquelles sont ménagés des patins de commande (44) pourvus des bords de commande qui coopèrent avec les extrémités des ressorts disposées en regard de l'ouverture du boîtier.

5. Récipient selon la revendication 4, caractérisé en ce que les lames de ressorts (14, 16) présentent, à proximité de leur endroit de fixation et du côté de l'ouverture du boîtier, une surépaisseur (56) qui coopère avec les patins de commande.

6. Récipient selon la revendication 5, caractérisé en ce que la surépaisseur est réalisée par une déformation (56) de la lame de ressort.

7. Récipient selon la revendication 3, caractérisé en ce que la barrette transversale (38) constitue un élément d'un système de verrouillage qui sert à retenir le tiroir (12) dans le boîtier (10), tandis que l'autre élément (70) du système est venu de moulage avec le boîtier.

8. Récipient selon l'une des revendications précédentes, caractérisé en ce que le tiroir (12) est réalisé en une seule pièce, en matière plastique moulée par injection.

9. Récipient selon l'une des revendications précédentes, caractérisé en ce que le boîtier comporte des pièces en matière plastique moulées par injection.

10. Récipient selon la revendications 2, caractérisé en ce que les deux lames de ressorts (14, 16) présentent la même forme en plan.

11. Récipient selon l'une des revendications précédentes, caractérisé en ce que le fond du boîtier comporte des tétons (48) sur lesquels sont fixés les lames de ressorts (14, 16), grâce à une ouverture complémentaire ménagée à cet effet dans les lames de ressorts.

12. Récipient selon la revendication 11, caractérisé en ce que le fond du boîtier comporte des nervures (50), sur lesquelles les lames de ressorts (14, 16) sont en appui latéralement.

13. Récipient selon l'une des revendications précédentes, caractérisé en ce que les bords des lames de ressorts (14, 16) proches de la lucarne du boîtier sont recourbées, suivant un profil qui s'écarte de la lucarne pour se diriger vers le fond (18) du boîtier.

14. Récipient selon la revendication 1, caractérisé en ce qu'il comporte une seule lame de ressort, disposée sensiblement au milieu du boîtier.

15. Récipient selon la revendication 2, caractérisé en ce que les deux ressorts sont divisés dans le sens du mouvement de sortie du tiroir.

**Fig. 1**

*Fig. 2*

*Fig. 3*

*Fig. 4*

0 085 186